# EUROPEAN PATENT SPECIFICATION

(11) **EP 4 320 032 B1**
(45) Date of publication and mention of the grant of the patent: **09.07.2025**
(21) Application number: 22715398.8
(22) Date of filing: 06.04.2022
(51) Int. Cl.: B62J 9/30, B62J 9/27

(54) **BAG FOR CYCLE OR MOTORCYCLE COMPRISING A SECURE LOCK**
TASCHE FÜR FAHRRAD ODER MOTORRAD MIT EINEM SICHEREN SCHLOSS
SACOCHE POUR CYCLE OU MOTOCYCLETTE COMPRENANT UN VERROU SÉCURISÉ

(30) Priority: 07.04.2021 IT 202100008600
(43) Date of publication of application: 14.02.2024
(73) Proprietor: Givi S.p.A., 25020 Flero (BS) (IT)
(72) Inventor: VISENZI, Giuseppe, 25100 Brescia (BS) (IT)
(74) Representative: Branca, Emanuela
(86) International application number: PCT/IB2022/053217
(87) International publication number: WO 2022/214996

(56) References cited:
- WO-A1-01/12496
- ES-A6- 2 027 155
- US-A1- 2013 168 427

## Description

The present invention relates to a bag for a cycle or motorcycle comprising a secure lock.

In the state of the art, bags are known which can be mounted separately on the frames of cycles, motorcycles or other similar vehicles. These bags comprise a bottom and a lid bound together by a hinge and a lock, a hook adapted to pass from a first fixed engaged configuration to the frame and a second disengaged configuration from the frame.

Disadvantageously, the existing bag locks allow the key to be removed with the lid open. If the key is accidentally inserted into the bag compartment and the lid is closed, the lid cannot be opened again due to the fact that the locking mechanism has been triggered.

ES2027155A6 describes a bag comprising a lock according to the preamble of claim 1.

The object of the present invention is to make a bag separably mountable with a frame of a cycle or motorcycle comprising a lock which overcomes the disadvantages of the known state of the art and is more secure and easier to use.

In accordance with the invention, such an object is reached with a bag according to claim 1.

Other features are provided in the dependent claims.

The features and advantages of the present invention will be more apparent from the following description, which is to be understood as exemplifying and not limiting, with reference to the appended schematic drawings, in which:

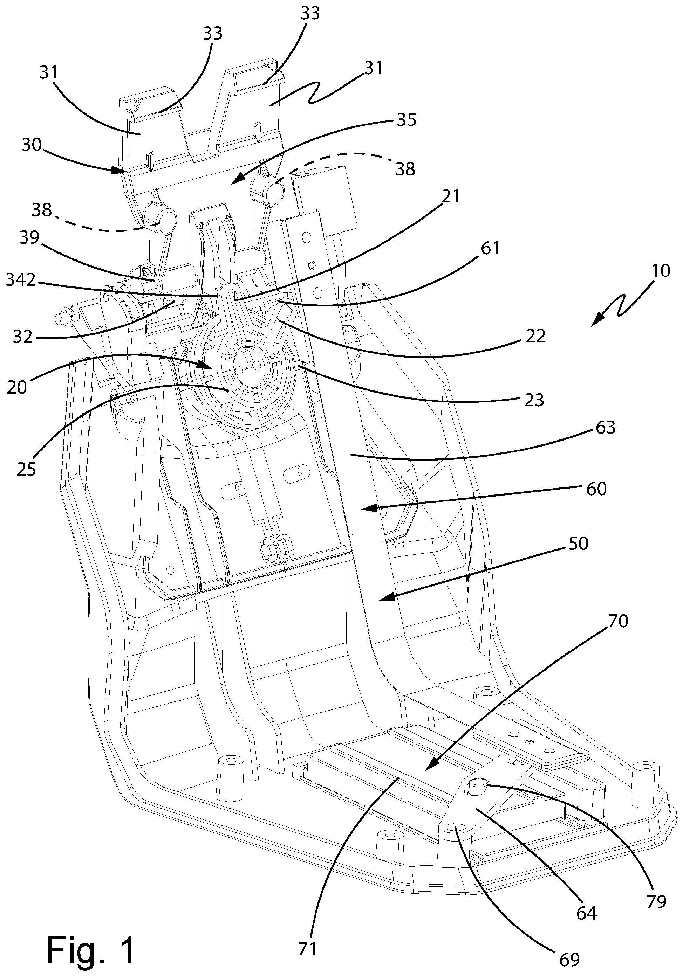

figure 1 is a perspective view of a lock mounted with a bag according to the present invention, in which the lock is seen from inside the bag, in which the lock is in a locking position and comprises a cam in a locking position and a hooking mechanism to a frame is in an unlocking configuration;

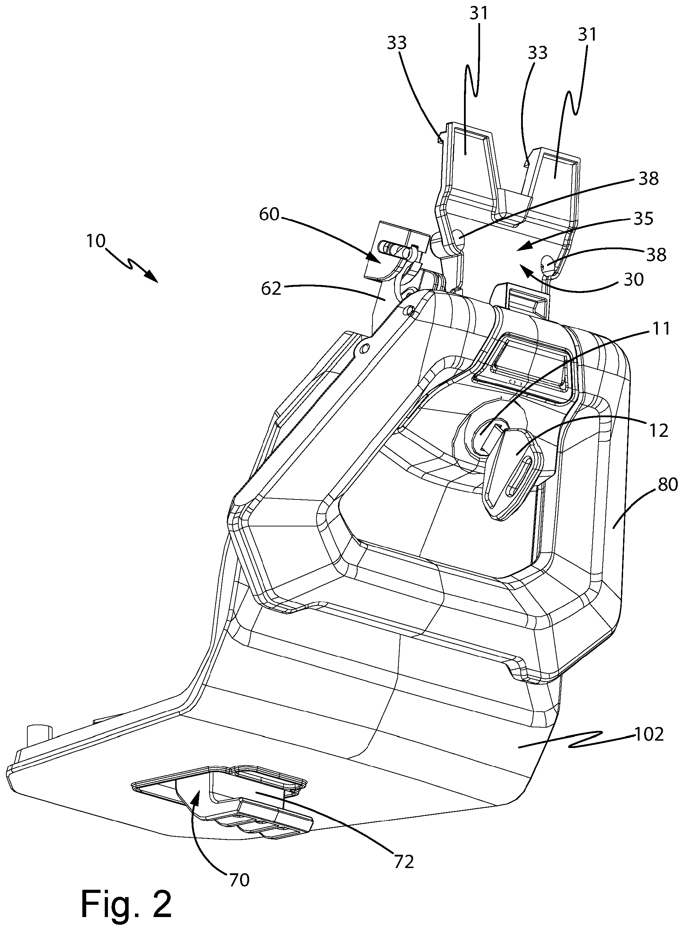

figure 2 is a perspective view from outside the bag of the lock in the locking and engaged position from outside the bag;

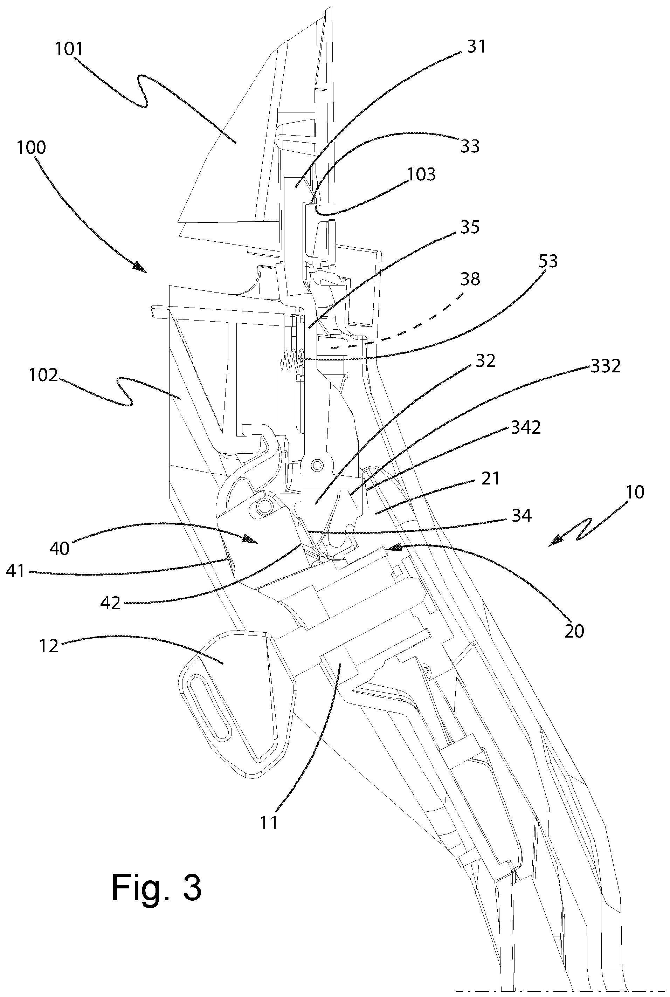

figure 3 is a section of the lock in the locking position;

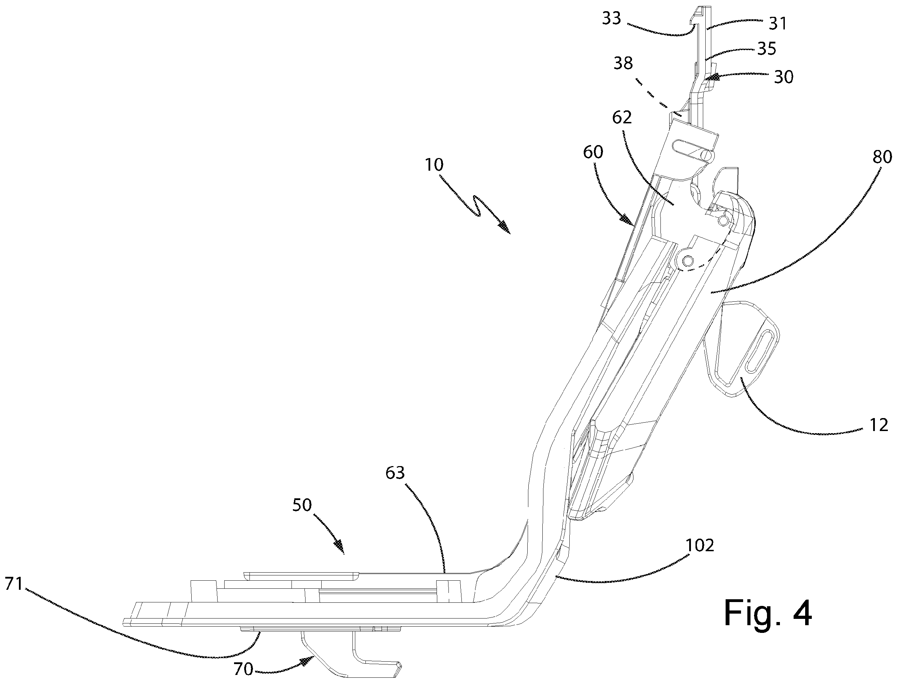

figure 4 is a side view of the lock in the locking position showing the hooking mechanism to a frame in the locking position;

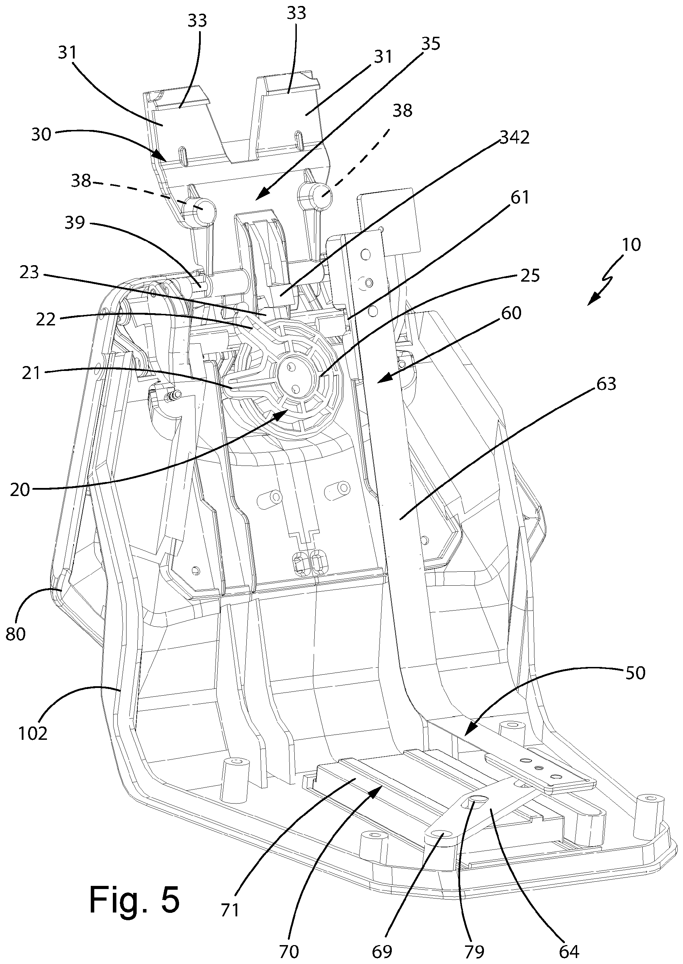

figure 5 is a perspective view of the lock in the unlocking position corresponding to an unlocking position of the cam, in which the hooking mechanism to the frame is in the engaged position to the frame;

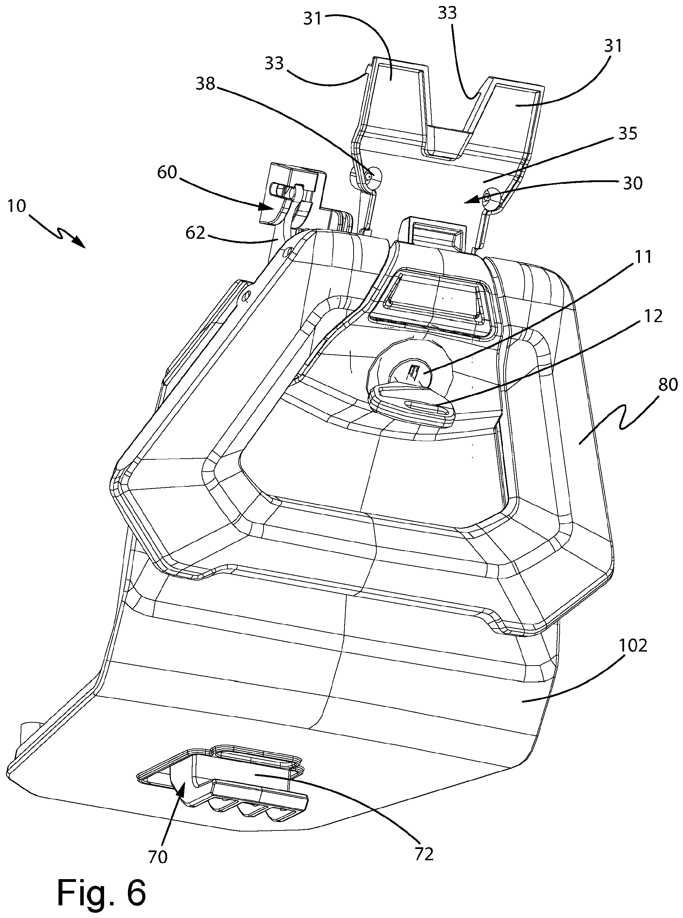

figure 6 is a perspective view from the outside of the bag of the lock in the unlocking position and with the hooking mechanism to the frame in the engaged position;

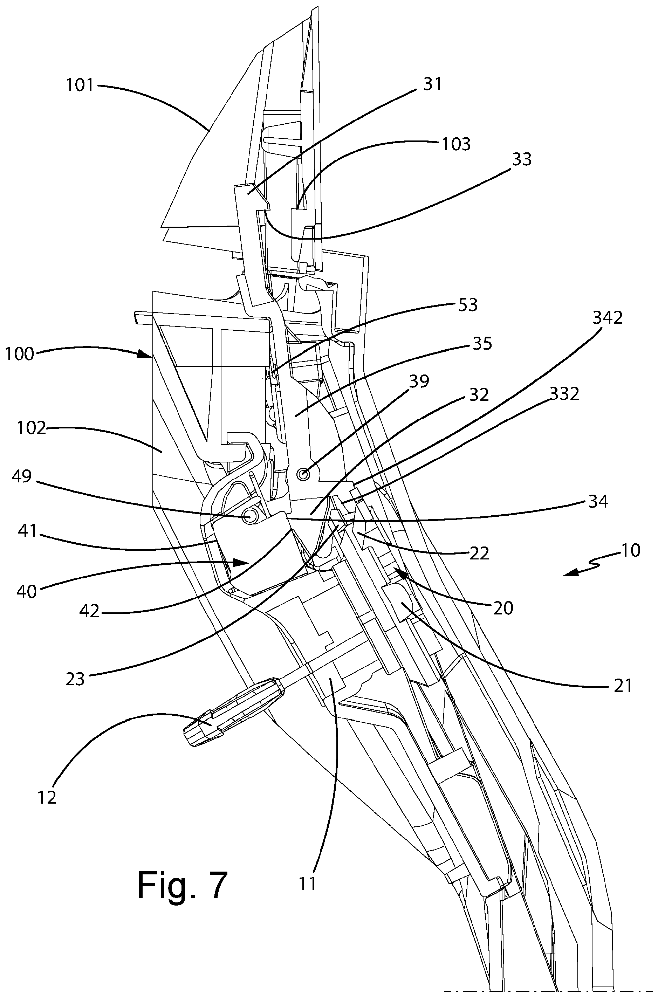

figure 7 is a section of the lock in the unlocking position;

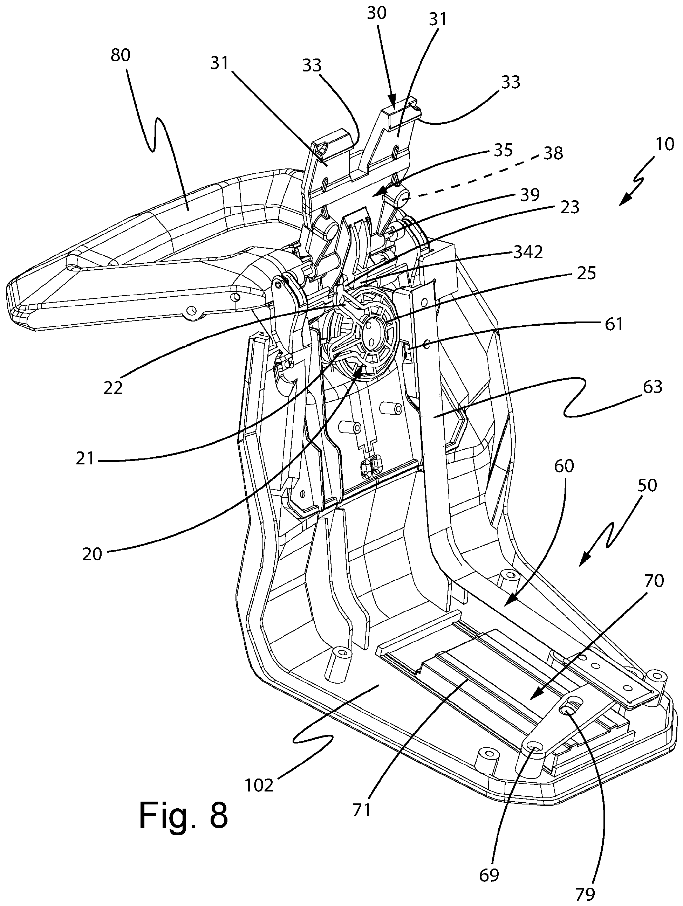

figure 8 is a perspective view of the lock in the unlocking position seen from inside the bag with the hooking mechanism to the frame in the disengaged position;

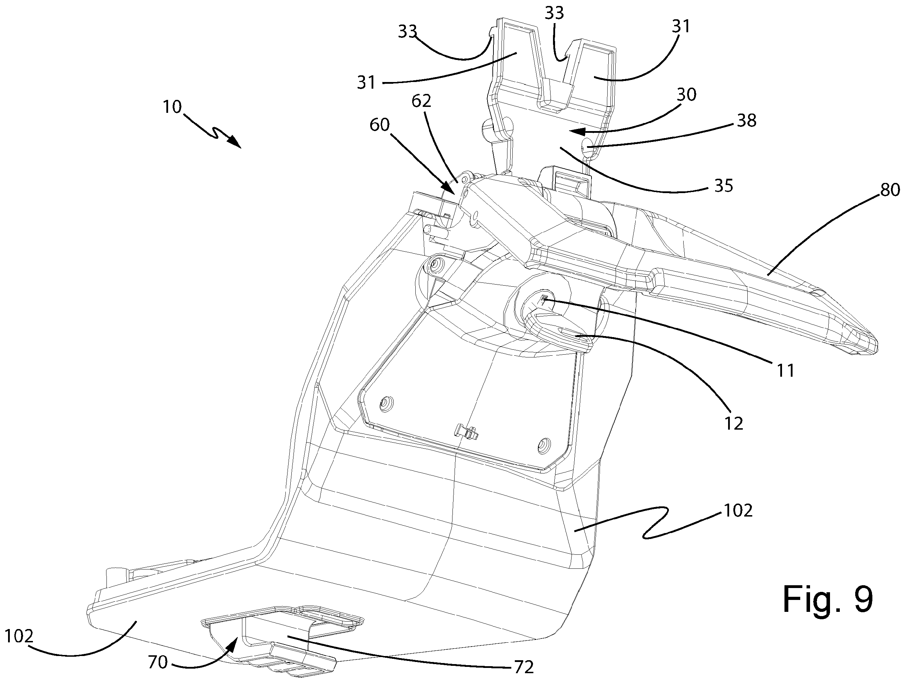

figure 9 is a perspective view from the outside of the bag of the lock in the unlocking and disengaged position;

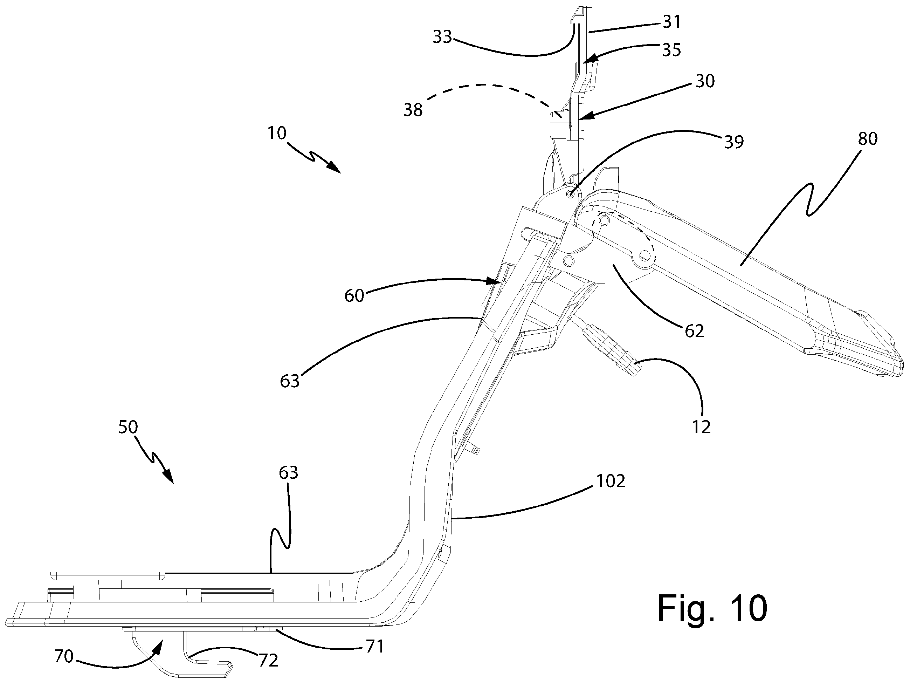

figure 10 is a side view of the lock in the unlocking position showing the hooking mechanism to a frame in the unlocking position;

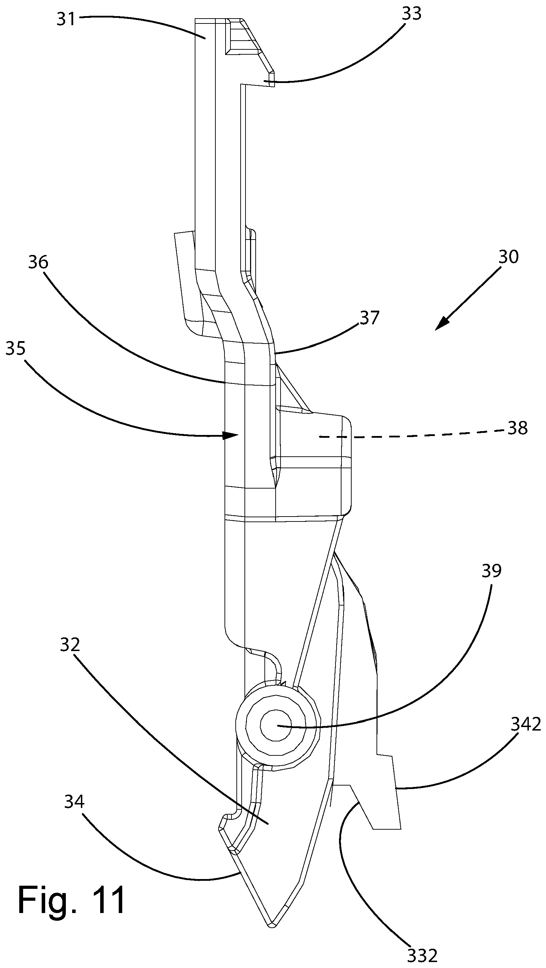

figure 11 is a side view of a first hook of the lock;

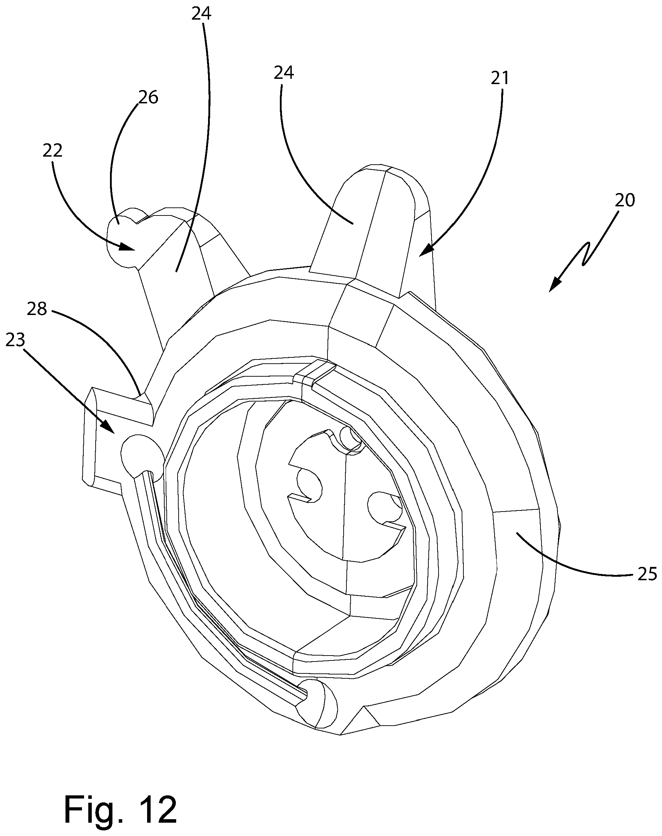

figure 12 is a perspective view of the cam of the lock;

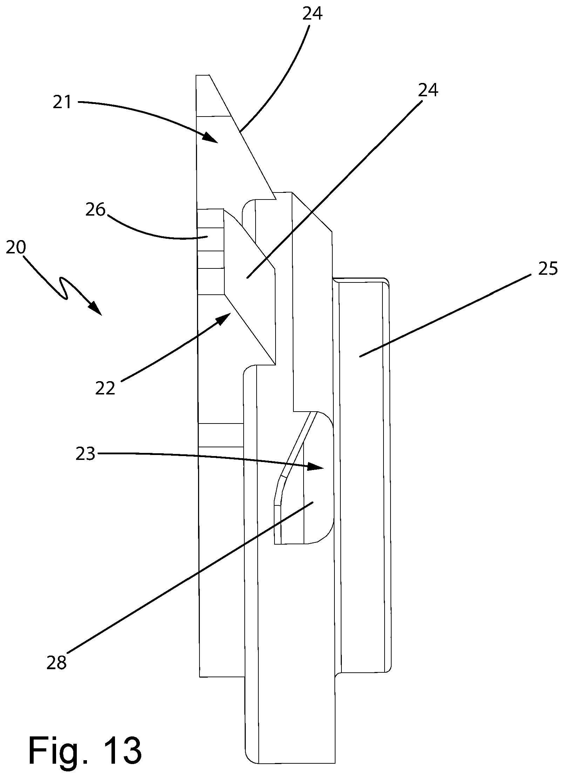

figure 13 is a side view of the cam of the lock.

With reference to the figures mentioned above, a bag 100 is shown which can be separately mounted with frames of cycles or motorcycles.

The bag 100 comprises a lid 101 and a bottom 102 bound together by a hinge and a lock 10.

The lock 10 is mounted with the bottom 102.

The lock 10 comprises a key 12, a rotating pawl 11 adapted to receive the key 12.

The lock 10 comprises a first hook 30 comprising a pivoting wall 35 pivoted with the bag 100 by means of a first pin 39. The wall 35 comprises two first portions 31 and two second portions 32, an outer face 36 facing the outside of the bag 100 and an inner face 37 facing the inside of the bag 100. The first portions 31 are upper portions and the second portions 32 are lower portions with respect to the first pin 39.

Each first portion 31 comprises a retainer tooth 33.

The retainer tooth 33 protrudes from the inner face 37 towards the inside of the bag 100.

Each second portion 32 comprises a first abutment portion 34. The second portion 32 of the pivoting wall 35 comprises a second abutment portion 342.

The first abutment portion 34 is on the outer face 36 of the pivoting wall 35.

The second abutment portion 342 is on the inner face 37 of the pivoting wall 35.

The lid 101 comprises a stop element 103 adapted to be engaged with the retainer tooth 30 to lock the lid 101 with the bottom 102.

The pivoting wall 35 of the first hook 30 rotating on the axis identified by the first pin 39 allows the first hook 30 to pass from an engaged position in which the retainer tooth 30 is engaged with the stop element 103 of the lid 101 to a disengaged position in which the retainer tooth 30 is disengaged from the stop element 103 allowing the opening of the bag 100.

The lock 10 comprises two elastic elements 53 each mounted between an inner wall of the bottom 102 of the bag 100 and the pivoting wall 35 of the first hook 30. As is clear from the figures, each elastic element 53 is mounted with a portion of the pivoting wall 35 between the first pin 39 and the first portion 31.

Preferably, the portion of the pivoting wall 35 where an end of the elastic element 53 is mounted comprises a housing 38 for said end of the elastic element 53 so as to keep the elastic element 53 in position during the transition from one configuration to another.

Said elastic element 53 passes from a lower compression configuration corresponding to the engaged position of the first hook 30 to a higher compression configuration corresponding to the disengaged position of the first hook 30. Advantageously, the first hook 30 is pushed by the elastic elements 53 into the engaged position.

Preferably the elastic elements 53 are springs as shown in the figure.

The lock 10 comprises a button 40 comprising an outer portion 41 adapted to be pressed by a finger of a person and an inner portion 42 adapted to abut with said first abutment portion 34.

By pressing the button 40, it passes from a rest position to a pushing position in which the inner portion 42 pushes the first abutment portion 34 of the pivoting wall 35, rotating the hook 30 around the first pin 39 so that the first hook 30 passes from the engaged position to the disengaged position.

Preferably, as shown in the figures, the button 40 is pivoted with the bottom 102 of the bag 100 by means of a second pin 49. The button 40 is mounted with an elastic element such as to hold the button 40 in the rest position.

The lock 10 comprises a first cam 20 rotatably mounted with the bag 100 and integral with the pawl 11.

The first cam 20 comprises a central body 25 and three radial portions 21, 22, 23 radially extending from the central body 25: a first radial portion 23, a second radial portion 21 and a third radial portion 22. Each radial portion 21-23 extends the first cam 20 in a radial direction.

The first cam 20 passes from a locking position to an unlocking position.

The locking and unlocking position of the first cam 20 corresponds to a locking and unlocking position of the lock 10.

The locking position includes that the first cam 20 is interposed against the second abutment portion 342 of the first hook 30 preventing the first hook 30 from passing from the engaged to the disengaged position.

Preferably, the second radial portion 21 is adapted to interpose with the second abutment portion 342 of the first hook 30, in which said locking position includes that said second radial portion 21 is interposed against the second abutment portion 342 of the first hook 30.

The lock 10 comprises a hooking mechanism to the frame 50 comprising a lever system 60 and a second hook 70 moved by said lever system 60 and adapted to pass from an engaged position with the frame to a disengaged position from the frame.

Said hooking mechanism to the frame 50 is adapted to pass from a first fixed engaged configuration to the frame corresponding to a fixed engaged configuration to the frame of the bag 100 and the engaged position of the second hook 70 with the frame to a disengaged configuration from the frame in which the bag 100 can be removed from the frame corresponding to the disengaged position of the second hook 70 from the frame.

The engaged and disengaged configuration of the mechanism 50 corresponds to an engaged and disengaged position of the lock 10.

Said lever system 60 comprises an element 61 adapted to interpose with said first cam 20 preventing said hooking mechanism to the frame 50 from passing from the fixed engaged configuration to the disengaged configuration.

Preferably, the element 61 of the lever system 60 is an opening adapted to house at least one portion of said first cam 20, which interposes between said element 61 and said first cam 20, which prevents said hooking mechanism to the frame 50 from passing from the fixed engaged configuration to the disengaged configuration is included when said at least one portion of said first cam 20 is housed within said element 61.

The portion of said first cam 20 which is housed within the element 61 is the second radial portion 20 of the first cam 20.

The locking position of the first cam 20 includes that the first cam 20 interposes with the element 61 of the lever system 60 preventing the second hook 70 from passing from the engaged position with the frame to the disengaged position from the frame.

The locking position of the first cam 20 includes that the key 12 can be disengaged from the pawl 11.

The unlocking position of the first cam 20 includes that the key 12 is prevented from disengaging from the pawl 11.

The unlocking position of the first cam 20 includes that the second radial portion 21 is not interposed with the second abutment portion 342 of the first hook 30 and that the third radial portion 22 is not interposed with the element 61 of the lever system 60.

The lock 10 comprises a handle 80 adapted to be operated by a person. The handle 80 moves the lever system 60 to pass the second hook 70 from the engaged position to the disengaged position with the frame and vice versa when the first cam 20 is in the locking position.

The lever system 60 comprises a foil 63 comprising the element 61. The foil 63 is slidably mounted with the bottom 102 of the bag 100. The lever system 60 comprises a second cam 62 pivoted with the bottom 102 and a handle 80.

The lever system 60 comprises a third cam 64 pivoted with the bottom 102 by means of a pin 69 and with the foil 63.

The second hook 72 comprises a slider 71 slidingly mounted with the bottom 102. The slider 71 comprises a pin 79 pivoted with the third cam 64.

The second hook 70 comprises a clamp 72 adapted to be engaged with the frame.

The clamp 72 is adapted to pass from a first fixed engaged configuration to the frame corresponding to a fixed engaged configuration to the frame of the bag 100 and the engaged position of the second hook 70 with the frame to a disengaged configuration from the frame in which the bag 100 can be removed from the frame corresponding to the disengaged position of the second hook 70 from the frame.

When the cam 20 is in the locking position it is possible to lift the handle 80 upwards, the second cam 62 pushes the foil 63 towards the bottom 102 moving the third cam 64 which slides the second hook 70 from the disengaged position to the engaged position with the frame.

In particular, the third cam 64 slides the slider 71 where the clamp 72 is mounted, which passes from an engaged position with the frame corresponding to the disengaged position to a disengaged position with the frame corresponding to the engaged and engaged position.

According to the invention, the second portion 32 of the pivoting wall 35 of the first hook 30 comprises a stop portion 332 adapted to interpose with the first radial portion 23 of the first cam 20 when the first cam 20 is in the unlocking position. The stop portion 332 is used to constrain the rotational movement of the pivoting wall 35 of the first hook 30 when the first cam 20 is in the unlocking position.

Preferably, the stop portion 332 comprises a wall inside the second abutment portion 342 and a wall inside the first abutment portion 34.

Preferably, the three radial portions 21-23 in the figures are three radial protuberances. When the cam 20 is in the locking position the second portion 21, observing the cam 20 from inside the bag 100, the central body 25 can be seen as a clock and thus the second portion 21 is arranged in a 12 o'clock direction, the third portion 22 is arranged in a direction between 12 and 3 o'clock, the first radial portion 23 is arranged at 3 o'clock.

Preferably, the second portion 21 and the third portion 22 comprise an invitation face 24 arranged facing outside the bag 100 and adapted to more efficiently constrain the movement between the cam 20 and the second abutment portion 342 of the first hook 30 to place them in interposition with each other.

Preferably, the third portion 22 comprises a further extension 26 adapted to interpose with the element 61.

Preferably, the first radial portion 23 comprises a second invitation face 28 arranged facing the inside of the bag 100 and adapted to more efficiently constrain the movement between the cam 20 and the stop portion 332 of the first hook 30.

Alternatively, it is included that the lock 10 is mounted with the lid 101.

Alternatively, it can be included that the first hook 30 comprises only one of said first portions 31.

Alternatively, it can be included that the first hook 30 comprises only one of said second portions 32.

Alternatively, the second radial portion 21 and the third radial portion 22 are a left and a right side of a single radial protuberance.

Alternatively, in a not claimed example, the first cam 20 comprises at least two radial portions 21, 22, i.e., the second 21 and a third 22 radial portion radially extending from said central body 25.

Alternatively, the lock 10 comprises only one elastic element 53.

Alternatively, the button 40 is mounted by means of an elastic element with the bottom 102 of the bag 100 so as to pass from the rest position to the pushing position of the first abutment portion 34 of the pivoting wall 35.

Alternatively, the element 61 of the lever system 60 is a stop element adapted to interpose with the first cam 20 to prevent the hooking mechanism to the frame 50 from moving from the engaged configuration to the disengaged configuration from the frame.

Alternatively, the handle 80 can be a lever or a button.

Alternatively, the foil 63 is a pushing and pulling element which allows to both push and pull the second hook 70.

Alternatively, the bag 100 is fixed to the frame by means of a fixing plate integral with the frame and thus considered part of the frame.

Advantageously, the lock 10 of the present invention mounted with the bag 100 separably mountable with the frame of the cycle, motorcycle or other similar vehicle overcomes the disadvantages of the known state of the art and is more secure and easier to use.

Advantageously, the bag 100 of the present invention overcomes the disadvantages of the known state of the art and is more secure and easier to use.

## Claims

1. A bag (100) comprising two portions (101, 102), namely a lid (101) and a bottom (102), as well as a hinge and a lock (10) which bind said lid (101) with said bottom (102),
wherein said bag (100) is separably mountable with a frame of a cycle or a motorcycle,
wherein said lock (10) comprises
a key (12),
a pawl (11) adapted to receive said key (12) and rotatably mounted with said bag (100),
a first hook (30) comprising a pivoting wall (35) pivoted to the bag (100), wherein said pivoting wall (35) comprises at least a first portion (31) and at least a second portion (32), wherein said at least a first portion (31) comprises a retainer tooth (33), wherein said at least a second portion (32) comprises a first abutment portion (34) and a second abutment portion (342), wherein said first hook (30) is adapted to pass from an engaged position in which said retainer tooth (33) is engaged with a stop element (103) of one of the two portions (101, 102) of the bag (100), to a disengaged position in which said retainer tooth (33) is disengaged from the stop element (103) and enables opening the bag (100),
at least one elastic element (53) mounted between an inner wall of the bag (100) and the pivoting wall (35) of the first hook (30), wherein said elastic element (53) passes from a lower compression configuration to a higher compression configuration,
a button (40) comprising an inner portion (42) adapted to abut with said first abutment portion (34), wherein the button (40) is adapted to pass from a rest position corresponding to the engaged position of the first hook (30) to a pushing position in which the inner portion (42) pushes the first abutment portion (34) of the pivoting wall (35) making the first hook (30) pass from the engaged position to the disengaged position,
a first cam (20) rotatably mounted with said bag (100) and integral with said pawl (11), wherein said first cam (20) passes from a locking position to an unlocking position,
a hooking mechanism to the frame (50) comprising a lever system (60) and a second hook (70) moved by said lever system (60) and adapted to pass from an engaged position with the frame to a disengaged position from the frame, wherein said hooking mechanism to the frame (50) is adapted to pass from a fixed engaged configuration to the frame corresponding to a fixed engaged configuration to the frame of the bag (100) and to the engaged position of the second hook (70) with the frame to a disengaged configuration from the frame in which it is possible to remove the bag (100) from the frame corresponding to the disengaged position of the second hook (70) from the frame,
wherein said lever system (60) comprises an element (61) adapted to interpose with said first cam (20) preventing said hooking mechanism to the frame (50) from passing from the fixed engaged configuration to the disengaged configuration,
wherein said locking position of the first cam (20) includes that said first cam (20) is interposed with the second abutment portion (342) of the first hook (30) preventing the first hook (30) from passing from the engaged position to the disengaged position, and that the first cam (20) is interposed with the element (61) of the lever system (60) preventing the second hook (70) from passing from the engaged position with the frame to the disengaged position from the frame,
wherein the locking position of the first cam (20) includes that the key (12) can be removed from the pawl (11), wherein the unlocking position of the first cam (20) includes that the key (12) is prevented from disengaging from the pawl (11),
**characterised in that** said at least a second portion (32) of the pivoting wall (35) of the first hook (30) comprises a stop portion (332) adapted to interpose with a first radial portion (23) of the first cam (20) when the first cam (20) is in the unlocking position, constraining the rotational movement of the pivoting wall (35) of the first hook (30).

2. Bag (100) according to claim 1, **characterized in that** said first cam (20) comprises a second radial portion (21) adapted to interpose with the second abutment portion (342) of the first hook (30), wherein said locking position includes that said second radial portion (21) is interposed against the second abutment portion (342) of the first hook (30).

3. Bag (100) according to claim 2, **characterized in that** said first cam (20) comprises a third radial portion (22) adapted to interpose with said element (61) of said lever system (60), wherein said fixed engaged configuration to the frame of said bag (100) includes that said third radial portion (22) interposes with said element (61).

4. Bag (100) according to any one of claims 1-3, **characterized in that** the element (61) of the lever system (60) is an opening adapted to house at least one portion of said first cam (20), **in that** the interposition between said element (61) and said first cam (20) preventing said hooking mechanism to the frame (50) from passing from the fixed engaged configuration to the disengaged configuration is included when said at least one portion of the first cam (20) is housed inside said element (61).

5. Bag (100) according to any one of claims 1-4, **characterized in that** said elastic element (53) passes from the lower compression configuration corresponding to the engaged position of the first hook (30) to the higher compression configuration corresponding to the disengaged position of the first hook (30).

6. Bag (100) according to any one of claims 1-5, **characterized in that** said button (40) is pivoted with the bag (100) by means of a second pin (49).

7. Bag (100) according to any one of claims 1-6, **characterized in that** it comprises a handle (80) adapted to be operated by a person, wherein said handle (80) moves the lever system (60) to make the second hook (70) pass from the engaged position with the frame to the disengaged position from the frame and vice versa.

8. Bag (100) according to any one of claims 1-7, **characterized in that** the lever system (60) comprises a pushing and pulling element (63) comprising the element (61), wherein said pushing and pulling element (63) is adapted to push and pull the second hook (70).

## Patentansprüche

1. Koffer (100) umfassend zwei Abschnitte (101, 102), nämlich einen Deckel (101) und einen Boden (102), sowie ein Scharnier und ein Schloss (10), die den Deckel (101) mit dem Boden (102) verbinden,
wobei der Koffer (100) trennbar an einem Rahmen eines Fahrrads oder Motorrads befestigbar ist,
wobei das Schloss (10) einen Schlüssel (12),
eine Sperrklinke (11) umfasst, die eingerichtet ist, den Schlüssel (12) aufzunehmen und die drehbar mit dem Koffer (100) eingebaut wird,
einen ersten Haken (30) umfassend eine Schwenkwand (35), die schwenkbar an dem Koffer (100) angebracht wird, wobei die Schwenkwand (35) mindestens einen ersten Abschnitt (31) und mindestens einen zweiten Abschnitt (32) umfasst, wobei der mindestens eine erste Abschnitt (31) einen Haltezahn (33) aufweist, wobei der mindestens eine zweite Abschnitt (32) einen ersten Auflageabschnitt (34) und einen zweiten Auflageabschnitt (342) umfasst, wobei der erste Haken (30) eingerichtet ist, von einer Eingriffsposition, in der der Haltezahn (33) mit einem Anschlagelement (103) eines der zwei Abschnitte (101, 102) des Koffer (100) in Eingriff steht, in eine Außen-Eingriffsposition zu wechseln, in der der Haltezahn (33) von dem Anschlagelement (103) gelöst wird und das Öffnen des Koffers (100) ermöglicht,
mindestens ein elastisches Element (53), das zwischen einer Innenwand des Koffers (100) und der Schwenkwand (35) des ersten Hakens (30) eingebaut wird, wobei das elastische Element (53) von einer Konfiguration mit geringerer Kompression in eine Konfiguration mit höherer Kompression wechselt,
einen Knopf (40) umfassend einen inneren Abschnitt (42), der eingerichtet ist, an dem ersten Auflageabschnitt (34) anzuliegen, wobei der Knopf (40) eingerichtet ist, von einer Ruheposition, die der Eingriffsposition des ersten Hakens (30) entspricht, in eine Schiebeposition zu wechseln, in der der innere Abschnitt (42) den ersten Auflageabschnitt (34) der Schwenkwand (35) schiebt, wodurch der erste Haken (30) von der Eingriffsposition in die gelöste Position wechselt,
einen ersten Nocken (20), der drehbar an dem Koffer (100) eingebaut wird und der einstückig mit der Sperrklinke (11) ausgebildet ist, wobei der erste Nocken (20) von einer Verriegelungsposition in eine Entriegelungsposition wechselt,
einen Einhakenmechanismus an dem Rahmen (50) umfassend ein Hebelsystem (60) und einen zweiten Haken (70), der von dem Hebelsystem (60) bewegt wird und der eingerichtet ist, von einer mit dem Rahmen Eingriffsposition in eine von dem Rahmen gelöste Position zu wechseln, wobei der Einhakenmechanismus an dem Rahmen (50) eingerichtet ist, von einer festen Eingriffskonfiguration mit dem Rahmen, die einer festen Eingriffskonfiguration mir dem Rahmen des Koffers (100) entspricht, und der Eingriffsposition des zweiten Hakens (70) mit dem Rahmen entspricht in eine von dem Rahmen gelöste Konfiguration zu wechseln, in der es möglich ist, den Koffer (100) von dem Rahmen zu entfernen, was der von dem Rahmen gelösten Position des zweiten Hakens (70) entspricht,
wobei das Hebelsystem (60) ein Element (61) umfasst, das eingerichtet ist, sich mit dem Nocken (20) dazwischen zu setzen und zu verhindern, dass der Einhakenmechanismus an dem Rahmen (50) von der festen Eingriffskonfiguration in die gelöste Konfiguration wechselt,
wobei die Verriegelungsposition des ersten Nockens (20) impliziert, dass sich der erste Nocken (20) mit dem zweiten Auflageabschnitt (342) des ersten Hakens (30) dazwischen setzt, um zu verhindern, dass der erste Haken (30) von der Eingriffsposition in die gelöste Position wechselt, und dass sich der erste Nocken (20) mit dem Element (61) des Hebelsystems (60) dazwischen setzt, um zu verhindern, dass der zweite Haken (70) von der Eingriffsposition mit dem Rahmen in die gelöste Position von dem Rahmen wechselt,
wobei die Verriegelungsposition des ersten Nockens (20) impliziert, dass der Schlüssel (12) von der Sperrklinke (11) entfernt werden kann, wobei die Entriegelungsposition des ersten Nockens (20) impliziert, dass dem Schlüssel (12) verhindert wird, sich von der Sperrklinke (11) zu lösen,
**dadurch gekennzeichnet, dass** mindestens ein zweiter Abschnitt (32) der Schwenkwand (35) des ersten Hakens (30) einen Anschlagabschnitt (332) umfasst, der eingerichtet ist, sich mit einem ersten radialen Abschnitt (23) des ersten Nockens (20) dazwischen zu setzen, wenn sich der erste Nocken (20) in der Entriegelungsposition befindet, wodurch die Drehbewegung der Schwenkwand (35) des ersten Hakens (30) begrenzt wird.

2. Koffer (100) nach Anspruch 1, **dadurch gekennzeichnet, dass** die erste Nocke (20) einen zweiten radialen Abschnitt (21) umfasst, der eingerichtet ist, sich mit dem zweiten Auflageabschnitt (342) des ersten Hakens (30) dazwischen zu setzen, wobei die Verriegelungsposition impliziert, dass der zweite radiale Abschnitt (21) gegen den zweiten Auflageabschnitt (342) des ersten Hakens (30) dazwischen gesetzt wird.

3. Koffer (100) nach Anspruch 2, **dadurch gekennzeichnet, dass** die erste Nocke (20) einen dritten radialen Abschnitt (22) umfasst, der eingerichtet ist, sich mit dem Element (61) des Hebelsystems (60) dazwischen zu setzen, wobei die mit dem Rahmen des Koffers (100) festen Eingriffskonfiguration impliziert, dass sich der dritte radiale Abschnitt (22) mit dem Element (61) dazwischen setzt.

4. Tasche (100) nach einem der Ansprüche 1 bis 3, **dadurch gekennzeichnet, dass** das Element (61) des Hebelsystems (60) eine Öffnung ist, die eingerichtet ist, mindestens einen Abschnitt des ersten Nockens (20) aufzunehmen, dass die Zwischenschaltung zwischen dem Element (61) und dem ersten Nocken (20), die verhindert, dass der Einhakenmechanismus an dem Rahmen (50) von der festen Eingriffskonfiguration in die gelöste Konfiguration wechselt, impliziert wird, wenn der mindestens eine Abschnitt des ersten Nockens (20) innerhalb des Elements (61) aufgenommen wird.

5. Koffer (100) nach einem der Ansprüche 1 bis 4, **dadurch gekennzeichnet, dass** das elastische Element (53) von der Konfiguration mit geringerer Kompression, die der Eingriffsposition des ersten Hakens (30) entspricht, in die Konfiguration mit höherer Kompression wechselt, die der gelösten Position des ersten Hakens (30) entspricht.

6. Koffer (100) nach einem der Ansprüche 1 bis 5, **dadurch gekennzeichnet, dass** der Knopf (40) mittels eines zweiten Stifts (49) mit dem Koffer (100) schwenkbar ist.

7. Koffer (100) nach einem der Ansprüche 1 bis 6, **dadurch gekennzeichnet, dass** sie einen Griff (80) umfasst, der eingerichtet ist, von einer Person betätigt zu werden, wobei der Griff (80) das Hebelsystem (60) bewegt, um den zweiten Haken (70) von der mit dem Rahmen Eingriffsposition in die von dem Rahmen gelöste Position und umgekehrt wechseln zu lassen.

8. Koffer (100) nach einem der Ansprüche 1-7, **dadurch gekennzeichnet, dass** das Hebelsystem (60) ein Schiebe- und Zugelement (63) umfasst, das das Element (61) aufweist, wobei das Schiebe- und Zugelement (63) eingerichtet ist, den zweiten Haken (70) zu schieben und zu ziehen.

## Revendications

1. Sac (100) comprenant deux parties (101, 102), à savoir un couvercle (101) et un fond (102), ainsi qu'une charnière et une serrure (10) qui lient ledit couvercle (101) avec ledit fond (102),
dans lequel ledit sac (100) peut être monté séparément sur le cadre d'un cycle ou d'une moto,
dans lequel ladite serrure (10) comprend une clé (12),
un cliquet (11) adapté pour recevoir ladite clé (12) et monté rotatif avec ledit sac (100), un premier crochet (30) comprenant une paroi pivotante (35) pivotant sur le sac (100), dans lequel ladite paroi pivotante (35) comprend au moins une première partie (31) et au moins une deuxième partie (32), dans lequel ladite au moins une première partie (31) comprend une dent de retenue (33), dans lequel ladite au moins une deuxième partie (32) comprend une première partie de butée (34) et une deuxième partie de butée (342), dans lequel ledit premier crochet (30) est adapté pour passer d'une position engagée dans laquelle ladite dent de retenue (33) est engagée avec un élément de butée (103) de l'une des deux portions (101, 102) du sac (100), à une position désengagée dans laquelle ladite dent de retenue (33) est désengagée de l'élément de butée (103) et permet d'ouvrir le sac (100),
au moins un élément élastique (53) monté entre une paroi intérieure du sac (100) et la paroi pivotante (35) du premier crochet (30), dans lequel ledit élément élastique (53) passe d'une configuration de compression inférieure à une configuration de compression supérieure,
un bouton (40) comprenant une partie intérieure (42) adaptée pour venir en butée avec ladite première partie de butée (34), dans lequel le bouton (40) est adapté pour passer d'une position de repos correspondant à la position engagée du premier crochet (30) à une position de poussée dans laquelle la partie intérieure (42) pousse la première partie de butée (34) de la paroi pivotante (35), faisant passer le premier crochet (30) de la position engagée à la position désengagée,
une première came (20) montée rotative avec ledit sac (100) et solidaire dudit cliquet (11), dans laquelle ladite première came (20) passe d'une position de verrouillage à une position de déverrouillage,
un mécanisme d'accrochage au cadre (50) comprenant un système de levier (60) et un deuxième crochet (70) déplacé par ledit système de levier (60) et adapté pour passer d'une position engagée avec le cadre à une position désengagée du cadre, dans lequel ledit mécanisme d'accrochage au cadre (50) est adapté pour passer d'une configuration engagée fixe avec le cadre correspondant à une configuration engagée fixe avec le cadre du sac (100) et à la position engagée du deuxième crochet (70) avec le cadre à une configuration désengagée du cadre dans laquelle il est possible de retirer le sac (100) du cadre correspondant à la position désengagée du deuxième crochet (70) du cadre,
dans lequel ledit système de levier (60) comprend un élément (61) adapté pour s'interposer avec ladite première came (20) empêchant ledit mécanisme d'accrochage au cadre (50) de passer de la configuration engagée fixe à la configuration désengagée,
dans lequel ladite position de verrouillage de la première came (20) inclut l'interposition de ladite première came (20) avec la deuxième partie de butée (342) du premier crochet (30), empêchant le premier crochet (30) de passer de la position engagée à la position désengagée, et l'interposition de la première came (20) avec l'élément (61) du système de levier (60), empêchant le deuxième crochet (70) de passer de la position engagée avec le cadre à la position désengagée par rapport au cadre,
dans lequel la position de verrouillage de la première came (20) inclut que la clé (12) peut être retirée du cliquet (11), dans laquelle la position de déverrouillage de la première came (20) inclut que la clé (12) est empêchée de se désengager du cliquet (11),
**caractérisé en ce que** ladite au moins une deuxième partie (32) de la paroi pivotante (35) du premier crochet (30) comprend une partie de butée (332) adaptée pour s'interposer avec une première partie radiale (23) de la première came (20) lorsque la première came (20) est en position de déverrouillage, contraignant le déplacement de rotation de la paroi pivotante (35) du premier crochet (30).

2. Sac (100) selon la revendication 1, **caractérisé en ce que** ladite première came (20) comprend une deuxième partie radiale (21) adaptée pour s'interposer avec la deuxième partie de butée (342) du premier crochet (30), dans laquelle ladite position de verrouillage inclut que ladite deuxième partie radiale (21) est interposée contre la deuxième partie de butée (342) du premier crochet (30)

3. Sac (100) selon la revendication 2, **caractérisé en ce que** ladite première came (20) comprend une troisième partie radiale (22) adaptée pour s'interposer avec ledit élément (61) dudit système de levier (60), dans lequel ladite configuration engagée fixe au cadre dudit sac (100) inclut que ladite troisième partie radiale (22) s'interpose avec ledit élément (61).

4. Sac (100) selon l'une des revendications 1 à 3, **caractérisé en ce que** l'élément (61) du système de levier (60) est une ouverture adaptée pour loger au moins une partie de ladite première came (20), **en ce que** l'interposition entre ledit élément (61) et ladite première came (20) empêchant ledit mécanisme d'accrochage au cadre (50) de passer de la configuration engagée fixe à la configuration désengagée est incluse lorsque ladite au moins une partie de la première came (20) est logée à l'intérieur dudit élément (61).

5. Sac (100) selon l'une quelconque des revendications 1 à 4, **caractérisé en ce que** ledit élément élastique (53) passe de la configuration de compression inférieure correspondant à la position engagée du premier crochet (30) à la configuration de compression supérieure correspondant à la position désengagée du premier crochet (30).

6. Sac (100) selon l'une des revendications 1 à 5, **caractérisé par le fait que** ledit bouton (40) pivote avec le sac (100) au moyen d'une deuxième goupille (49).

7. Sac (100) selon l'une des revendications 1 à 6, **caractérisé en ce qu'**il comprend une poignée (80) adaptée pour être actionnée par une personne, dans laquelle ladite poignée (80) déplace le système de levier (60) pour faire passer le deuxième crochet (70) de la position engagée avec le cadre à la position désengagée du cadre et vice versa.

8. Sac (100) selon l'une des revendications 1 à 7, **caractérisé par le fait que** le système de levier (60) comprend un élément de poussée et de traction (63) comprenant l'élément (61), dans lequel ledit élément de poussée et de traction (63) est adapté pour pousser et tirer le deuxième crochet (70).
